(19) Europäisches Patentamt
European Patent Office
Office européen des brevets

(11) **EP 1 855 028 B1**

(12) **EUROPÄISCHE PATENTSCHRIFT**

(45) Veröffentlichungstag und Bekanntmachung des Hinweises auf die Patenterteilung:
**11.03.2009 Patentblatt 2009/11**

(51) Int Cl.:
*F16H 15/42* *(2006.01)*     *F16H 37/08* *(2006.01)*

(21) Anmeldenummer: **06113800.4**

(22) Anmeldetag: **11.05.2006**

(54) **Kegelringgetriebe mit optimiertem Reibring**

Conical friction ring transmission with an optimized friction ring

Transmission avec éléments coniques et anneau de friction optimisé

(84) Benannte Vertragsstaaten:
**DE FR GB**

(43) Veröffentlichungstag der Anmeldung:
**14.11.2007 Patentblatt 2007/46**

(73) Patentinhaber: **Getrag Ford Transmissions GmbH
50735 Köln (DE)**

(72) Erfinder:
• **Bungart, Stephan
42855, Remscheid (DE)**
• **Chazotte, Jean-Pierre
50226, Frechen (DE)**
• **Fiekens, Rüdiger
51109, Köln (DE)**
• **Kokus, Stefan
53859, Niederkassel (DE)**
• **Welsch, Gerd
50733, Köln (DE)**

(56) Entgegenhaltungen:
**EP-A- 0 657 663       DE-A1- 19 837 368**

**Beschreibung**

Die Erfindung betrifft ein Kegelringgetriebe mit zwei entgegengesetzt zueinander angeordneten Kegelreibrädern und mit einem Reibring, der eines der Kegelreibräder umgreift und mit beiden Kegelreibrädern in Eingriff steht, entsprechend dem Oberbegriff des Anspruchs 1 und wie es aus der DE 19837368 A bekannt ist.

Aus der DE 103 03 891 A1 ist ein Kegelringgetriebe bekannt, bei dem die entgegengesetzt zueinander angeordneten Kegelreibräder mit jeweils gleichen Öffnungswinkeln auf parallelen Wellen sitzen. Durch Verstellen des Reibringes in axialer Richtung der Wellen lässt sich das Übersetzungsverhältnis des Kegelringgetriebes stufenlos einstellen.

Der Reibring weist eine umlaufende, radial nach außen gewandte äußere Kontaktoberfläche und eine umlaufende, radial nach innen gewandte innere Kontaktoberfläche auf. Die innere Kontaktoberfläche bildet dabei mit einer Kontaktoberfläche des von dem Reibring umgriffenen Kegelreibrads eine erste Kontaktzone aus. Die Kontaktoberfläche des Kegelreibrads ist dabei die konische Mantelfläche des Kegelreibrads. Eine zweite Kontaktzone ist zwischen der äußeren Kontaktoberfläche des Reibrings und einer Kontaktoberfläche des Kegelreibrads gegeben, das nicht von dem Reibring umgriffen wird. Da der Reibring zwischen den beiden sich gegenüberstehenden Kegelreibrädern eingespannt ist, lässt sich durch ihn ein Drehmoment über die beiden Kontaktzonen zwischen den beiden Kegelreibrädern übertragen.

Zur Übertragung des Drehmomentes zwischen den Rotationskörpern (Kegelreibräder und Reibring) wird üblicherweise ein geeignetes Traktionsfluid eingesetzt, durch das die aneinander liegenden Kontaktoberflächen in einer Kontaktzone getrennt werden sollen. Ist eine derartige Trennung durch das Traktionsfluid gegeben, erfolgt die Übertragung des Drehmomentes über Scherspannungen des Traktionsfluids in dem dann gegebenen Spalt zwischen den beteiligten Rotationskörpern. Gelingt eine Übertragung des Drehmomentes rein über die Scherung des Traktionsfluids, kann ein abrasiver Verschleiß der üblicherweise metallischen Kontaktoberflächen idealerweise vollständig vermieden werden.

Üblicherweise ist sowohl die innere als auch die äußere Kontaktoberfläche des Reibringes in einem Schnitt oder in einer Ebene senkrecht zur Drehrichtung des Reibringes eine Gerade, so dass sich zwischen dem Reibring und einem Kegelreibrad jeweils ein Linienkontakt ausbildet. Der Linienkontakt erstreckt sich dabei von einer ersten axialen Stirnseite bis zu einer zweiten axialen Stirnseite des Reibrings. Der Linienkontakt wird dabei durch eine erste und zweite umlaufende Kante des Reibrings begrenzt, die jeweils die umlaufende Kontaktoberfläche von der jeweiligen axialen Stirnseite trennt.

Bei einem Linienkontakt kommt es jedoch zu einem so genannten Kantentragen, wobei es an den Kanten des Reibrings, die den Linienkontakt in axialer Richtung begrenzen, zu größeren Pressungen kommt, aufgrund derer es zu unerwünschten Spannungsspitzen im Material des Reibrings und eine günstige Scherkraftverteilung des Traktionsfluids im Spalt zwischen Reibring und Kegelreibrad nicht mehr gewährleistet ist. Vielmehr besteht die Gefahr, dass an den Kanten des Reibrings der Traktionsfluid-Film abreißt und somit die materialschonende Drehmomentübertragung ausschließlich über das Traktionsfluid nicht mehr stattfindet.

Beispielsweise aus der DE 103 03 891 A1 ist bekannt, die Kontaktoberfläche des Reibrings in dem Schnitt senkrecht zur Drehrichtung des Reibrings konvex bzw. ballig auszuführen. So führt eine gleichmäßige Krümmung der Kontaktoberfläche im Schnitt senkrecht zur Drehrichtung des Reibrings nicht zu einem Linienkontakt, sondern zu einem Punktkontakt. Durch einen derartigen Punktkontakt lässt sich das oben erwähnte nachteilige Kantentragen weitestgehend vermeiden. Jedoch führt ein Punktkontakt über der Breite des Reibringes gesehen zu einer parabelähnlichen Pressungsverteilung mit der Folge, dass es hier insbesondere in der Mitte des Reibringes (zwischen den beiden umlaufenden Kanten) zu unerwünscht hohen Spannungen kommt. Diese unerwünscht hohen Spannungen müssen vermieden werden. Daher wird i.d.R. die Pressung reduziert, deren Folge eine Abnahme des maximal übertragbaren Drehmoments ist. Es lässt sich vereinfachend sagen, dass ein Punktkontakt weniger Drehmoment überträgt als ein Linienkontakt, da die Belastungsgrenzen des Reibringmaterials und/oder des Traktionsfluids an keiner Stelle des Kontakts überschritten werden dürfen.

Der Erfindung liegt daher die Aufgabe zugrunde, ein Kegelringgetriebe bereitzustellen, das ein hohes Drehmoment möglichst ohne Verschleiß effizient übertragen kann.

Die der Erfindung zugrunde liegende Aufgabe wird mit den Merkmalen des Anspruchs 1 gelöst. Bevorzugte Ausführungsbeispiele der Erfindung können den Unteransprüchen 2 bis 9 entnommen werden. Anspruch 10 ist auf einen Reibring für ein Kegelringgetriebe gemäß den Ansprüchen 1 bis 9 gerichtet.

Das erfindungsgemäße Kegelringgetriebe zeichnet sich dadurch aus, dass wenigstens eine der Kontaktoberflächen des Reibrings in einem Schnitt senkrecht zur Drehrichtung des Reibrings ein Profil P mit einem logarithmischen Verlauf aufweist. Das Profil P ist dabei eine Funktion, die proportional zu der logarithmischen Funktion In ist, deren Argument von einer Größe x abhängt, die den Abstand zu einer Mitte der Kontaktfläche darstellt. Die Mitte der Kontaktoberfläche ist dabei der Punkt (im Schnitt der Kontaktoberfläche gesehen), der mittig zwischen den Kanten des Reibrings liegt, die die Kontaktoberfläche in axialer Richtung des Reibrings begrenzen.

Somit kann das Argument der logarithmischen Funktion In als eine Funktion F in Abhängigkeit von x aufgefasst werden, nämlich als eine Funktion F(x). Die Verknüpfung der logarithmischen Funktion In(F(x)) und dem Profil bzw. der Profilfunktion P(x) erfolgt über einen (Proportionalitäts-)Faktor A. Dieser Faktor A ist vorzugsweise unabhängig von der Größe x.

Die Funktion F(x) ist vorzugsweise eine monoton steigende Funktion. Da auch die logarithmische Funktion ln eine monoton steigende Funktion ist, steigt die Profilfunktion P(x) mit größer werdendem Abstand x von der Mitte an. Die Profilfunktion P(x) kann dabei als Abstand der profilierten Kontaktoberfläche zu einer geradlinigen oder unbearbeitenden Kontaktoberfläche des Reibrings verstanden werden. Dabei ist der Abstand dieser Geraden in der Mitte der Kontaktoberfläche am kleinsten und steigt logarithmisch mit steigenden Werten x bis zu den axialen Enden der Kontaktoberfläche bzw. bis zu den Kanten des Reibrings an. Es hat sich überraschend herausgestellt, dass eine derartige Profilfunktion P(x) mit einem logarithmischen Verlauf zu einer besonders günstigen Pressungsverteilung und damit zu einer günstigen Scherkraftverteilung im Traktionsfluid führt.

In einem besonders bevorzugten Ausführungsbeispiel lautet die Funktion F(x) wie folgt:

$$F(x) = \cfrac{1}{1 - \left(\cfrac{2 \cdot x}{B_R}\right)^2}$$

mit

x      Abstand von der Mitte des Profils bzw. der Kontaktoberfläche; und

$B_R$      Breite der Kontaktoberfläche des Reibrings.

Eine derartige Funktion F(x) führt unmittelbar in der Mitte der Kontaktfläche zu einem Wert 0, da der ln von 1 gleich Null ist (in diesem Fall ist der Nenner der Funktion F(x) gleich 1). An den axialen Enden der Kontaktoberfläche oder an den Kanten wird die Funktion F(x) unendlich groß, da dort der zweifache Abstand x zur Mitte der Kontaktfläche der Breite $B_R$ entspricht und somit der Nenner in der Funktion F(x) gleich Null wird. Dies würde zu unendlich großen Werten für die Funktion P(x) an den Kanten des Ringes führen. In der Praxis jedoch soll dies zu Werten für die Funktion P(x) an den Kanten des Reibrings führen, die wesentlich größer sind als die übrigen Werte.

Der Faktor A kann proportional zu einer Anpresskraft Q sein, die von jeweils einem Kegelreibrad auf den Reibring übertragen wird. Bei der Anpresskraft Q handelt es sich dabei zweckmäßig um einen Sollwert (Maximalwert), der bei der Auslegung des Kegelringgetriebes festgelegt wird. Je höher die Anpresskraft Q ist, desto mehr führt die Funktion P(x) zu einem balligen Verlauf der Kontaktoberfläche.

In einem bevorzugten Ausführungsbeispiel ist der Faktor A umgekehrt proportional zu einem Elastizitätsmodul E eines Materials des Reibrings bzw. der Kegelreibräder. Bei einem sehr großen Elastizitätsmodul E führt diese Abhängigkeit zu einem sehr flachen Verlauf der Profilfunktion P(x). Ein großes Elastizitätsmodul E bedeutet, dass sich das Material des Reibrings bei einer gegebenen Anpresskraft Q nur sehr wenig verformt. Entsprechend wird die Kontaktoberfläche insbesondere im Bereich der Mitte des Reibrings nur sehr wenig eingedrückt, so dass im Idealzustand unter Berücksichtigung der Verformung sich über die Breite der Kontaktoberfläche eine im wesentlichen gleichmäßige und konstante Pressung ergibt.

In einem bevorzugten Ausführungsbeispiel ist der Faktor A umgekehrt proportional zu der Breite $B_R$ der Kontaktoberfläche. Zudem kann der Faktor A proportional zu einem Term T sein, der in folgender Weise von einer Querkontraktionszahl μ des Materials des Reibrings abhängt:

$$T = 1 - \mu^2$$

mit μ Querkontraktionszahl des Materials des Reibrings bzw. der Kegelreibräder.

Der Faktor A kann sich aus folgendem Zusammenhang ergeben:

$$A = \frac{a \cdot Q \cdot (1 - \mu^2)}{E \cdot B_R}$$

mit

a      Konstante zwischen 0,4 und 0,8.

In einem besonders bevorzugten Ausführungsbeispiel ist die Konstante a gleich 2/ , also rund 0,64. Es kann aber auch vorteilhaft sein, dass eine Konstante $a_i$ für die innere Kontaktoberfläche von einer Konstanten $a_a$ für die äußere Kontaktoberfläche abweicht. In letztgenanntem Fall kann die Konstante $a_i$ größer sein als die Konstante $a_a$. Dies hat zur Folge, dass die innere Kontaktoberfläche des Reibrings stärker einem logarithmischen Verlauf folgt als die äußere Kontaktoberfläche des Reibrings.

Dies führt in der Tendenz zu einer konzentrierten Pressungsverteilung an der inneren Kontaktoberfläche des Reibrings. Diese konzentrierte Pressungsverteilung kann durch eine flachere Pressungsverteilung in Umlaufrichtung des Reibringes ausgeglichen werden. Die im wesentlichen flachere Pressungsverteilung in Umlaufrichtung bei der inneren Kontaktoberfläche ist darauf zurückzuführen, dass in Umlaufrichtung gesehen die radial nach innen gerichtete innere Kontaktoberfläche des Reibrings und die Kontaktoberfläche des umgriffenen Kegelreibrads einen eher flächigen Kontakt im Vergleich zu dem Kontakt zwischen der äußeren Kontaktoberfläche des Reibrings und des nicht umgriffenen Kegelreibrades bilden.

Es kann aufgrund der Geometrie und der Belastungen sinnvoll sein, dass die Breite $B_{RI}$ der inneren Kontaktoberfläche des Reibrings mit gleicher Breite, breiter oder bevorzugt weniger breit, als die Breite $B_{RA}$ der äußeren Kontaktoberfläche ausgelegt wird.

Anhand eines in der Zeichnung dargestellten Ausführungsbeispiels wird die Erfindung näher erläutert. Es zeigen:

Figur 1 den schematischen Aufbau eines Kegelringgetriebes; und

Figur 2 einen vergrößerten Schnitt eines Reibringes senkrecht zu seiner Umlaufrichtung.

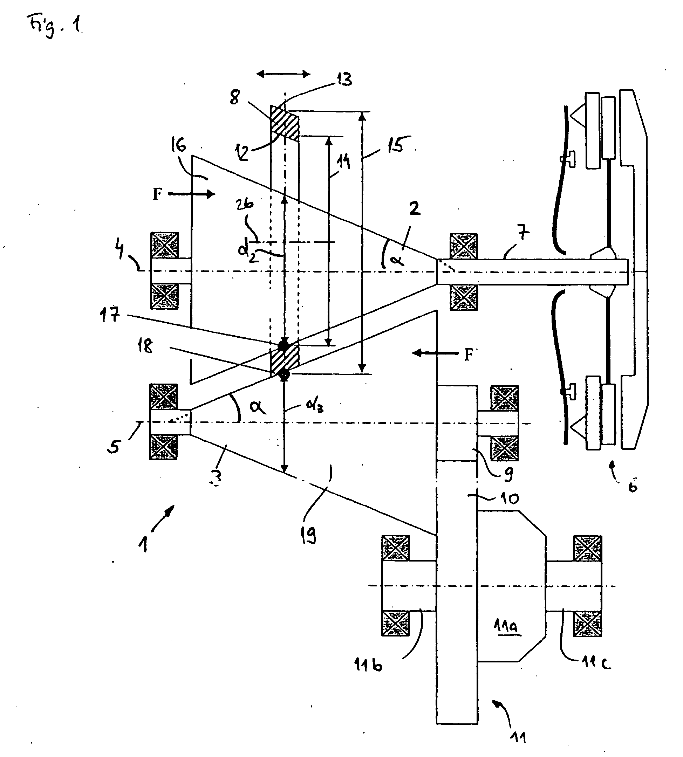

Figur 1 zeigt ein Kegelringgetriebe, das in seiner Gesamtheit mit 1 bezeichnet wird. Das Kegelringgetriebe 1 weist ein erstes Kegelreibrad 2 und ein zweites Kegelreibrad 3 auf. Die Kegelreibräder 2, 3 sind zueinander entgegengesetzt angeordnet, wobei deren Drehachse parallel verlaufen und zueinander beabstandet sind. Die Drehachsen der Kegelreibräder 2, 3 sind durch die gestrichelten Linien 4, 5 dargestellt. Jedes Kegelreibrad 2, 3 weist einen Öffnungswinkel auf.

Neben dem Kegelringgetriebe 1 zeigt Figur 1 eine Kupplung 6 eines hier nicht weiter dargestellten Kraftfahrzeuges. Die Kupplung 6 ist drehfest über eine Welle 7 mit dem ersten Kegelreibrad 2 verbunden. In einem geschlossenen Zustand überträgt die Kupplung 6 ein Drehmoment über die Welle auf das erste Kegelreibrad 2. Um dieses Drehmoment von dem ersten Kegelreibrad 2 auf das zweite Kegelreibrad 3 zu übertragen, ist ein Reibring 8 vorgesehen, der mit beiden Kegelreibrädern 2, 3 in Eingriff steht und das erste Kegelreibrad 2 umgreift. Der Reibring 8 lässt sich über einen Verstellmechanismus, der hier nicht dargestellt ist, in Richtung der aus Reibring 8 und der Kegelreibräder 2, 3 gebildeten Berührlinien axial verschieben. Durch axiales Verschieben des Reibringes 8 wird das Übersetzungsverhältnis des Kegelringgetriebes 1 verändert. Da die axiale Lage des Reibringes 8 stufenlos eingestellt werden kann, weist das Kegelringgetriebe 1 ein stufenlos variierbares Übersetzungsverhältnis auf.

Das auf das zweite Kegelreibrad 3 übertragene Drehmoment wird über ein Zahnradpaar, bestehend aus einem Zahnrad 9 und einem mit diesem Zahnrad 9 kämmenden Ringzahnrad 10 zu einer Abtriebseinheit 11 geleitet. Die Abtriebseinheit 11 besteht aus einem Differential 11a und zwei Achsen 11b, 11c. Das Differential 11a verteilt das an dem Zahnrad 10 anliegende Drehmoment auf die Achsen 11b, 11c. Entsprechend des Drehmomentflusses kann bei dem in Figur 1 dargestellten Kegelringgetriebe 1 das erste Kegelreibrad 2 als Eingangsrad und das zweite Kegelreibrad 3 als Ausgangsrad bezeichnet werden.

Entlang der Drehachsen 4, 5 lassen sich die Kegelreibräder 2, 3 relativ zueinander verschieben. Durch diese relative Verschiebbarkeit lässt sich eine axiale Kraft F über einen hier nicht weiter dargestellten Aktuator einstellen, der die Kegelreibräder 2, 3 in axialer Richtung der Drehachsen 4, 5 gegen den Reibring 8 drückt.

Der Reibring 8 weist eine Ringinnenfläche oder eine innere Kontaktoberfläche 12 und eine Ringaußenfläche oder eine äußere Kontaktoberfläche 13 auf. Die innere Kontaktoberfläche 12 ist - bezogen auf die Drehachse 26 des Reibrings 8 - konisch ausgebildet, wobei der entsprechende Konuswinkel dem Öffnungswinkel des Kegelreibrads 2 bzw. des Kegelreibrads 3 entspricht. Auch die äußere Kontaktoberfläche 13 des Reibrings 8 ist konisch ausgebildet und ebenfalls durch den Öffnungswinkel gekennzeichnet. Die Drehachse 26 des Reibrings 8 ist parallel zu den Drehachsen 4, 5 angeordnet. Der inneren Kontaktoberfläche 12 des Reibringes 8 kann ein mittlerer Durchmesser 14 zugeordnet werden. Entsprechend weist die äußere Kontaktoberfläche 13 des Reibringes 8 einen mittleren Außendurchmesser 15 auf.

Wie der Figur 1 zu entnehmen ist, liegt die innere Kontaktoberfläche an einer Mantelfläche 16 des Kegelreibrads 2 in einer ersten Kontaktzone 17 an. Im Betrieb des Kegelringgetriebes 1 bildet sich in der Kontaktzone 17 ein schmaler Film eines Traktionsfluids, so dass die Kontaktoberfläche 16 des Kegelreibrads 2 und die innere Kontaktoberfläche 12 des Reibringes 8 durch das Traktionsfluid voneinander getrennt sind und nicht unmittelbar aufeinander abwälzen. Aufgrund des hohen Drucks in der Kontaktzone 17 und einer hohen Viskosität überträgt das Traktionsfluid aufgrund der vom Traktionsfluid aufnehmbaren Scherspannungen das Drehmoment des Kegelreibrings 2 auf den Reibring 8.

Entsprechend der ersten Kontaktzone 17 ist eine zweite Kontaktzone 18 zwischen einer Kontaktoberfläche 19, die die konische Mantelfläche des Kegelreibringes 3 darstellt und der äußeren Kontaktoberfläche 13 des Reibringes 8 gegeben. Auch in der zweiten Kontaktzone 18 bildet sich im Betrieb des Kegelringgetriebes 1 ein Film des Traktionsfluids zwischen der Kontaktoberfläche 13 und der Kontaktoberfläche 19 aus, so dass auch hier die beiden sich gegenüberstehenden Oberflächen voneinander getrennt sind. Auch hier wird das Drehmoment idealerweise nur mittels des Traktionsfluids übertragen.

Die Dreh- oder Umlaufrichtungen in der ersten und zweiten Kontaktzone 17, 18 der Rotationskörper des Kegelringgetriebes 1 (Kegelreibräder 2, 3 und Reibring 8) erstrecken sich senkrecht zur Zeichenebene der Figur 1. Entsprechend der axialen Lage des Reibrings und aufgrund der Konizität des Kegelreibrads 2 ändert sich der wirksame Durchmesser $d_2$. Dies gilt sinngemäß auch für einen wirksamen Durchmesser $d_3$ des Kegelreibrads 3. Durch Änderung der wirksamen Durchmesser $d_2$, $d_3$ ändert sich entsprechend das Übersetzungsverhältnis des

Kegelringsgetriebes 1.

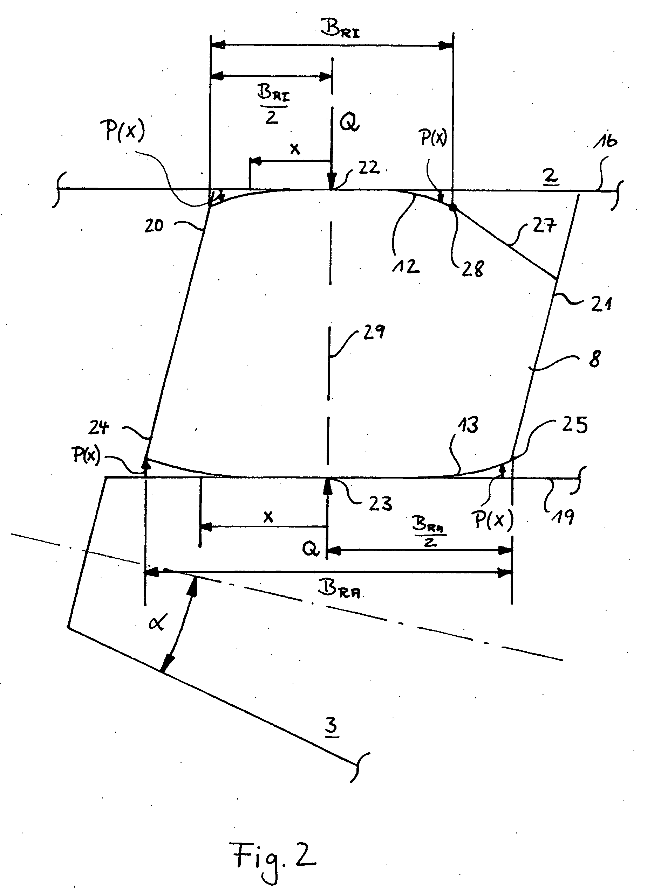

Figur 2 zeigt in einer Vergrößerung den Reibring 8 im Schnitt zwischen der Kontaktoberfläche 16 des ersten Kegelreibrads 2 und der Kontaktoberfläche 19 des zweiten Kegelreibrads 3. In Figur 2 sind die Kegelreibräder 2, 3 nur im Ausschnitt dargestellt.

Darüber hinaus sind in der Darstellung der Figur 2 gegenüber der Figur 1 die Kegelreibräder 2, 3 und auch der Reibring 8 um den Winkel gekippt, so dass nun die mit dem Reibring 8 in Eingriff stehenden Kontaktoberflächen 16, 19 in der Horizontalen liegen.

Figur 2 soll lediglich eine schematische Darstellung sein. In Wirklichkeit können daher die dort dargestellten Längen, Breiten und andere Größen im Verhältnis zueinander deutlich abweichen.

Bedingt durch die axiale Kraft F, mit der die Kegelreibräder 2, 3 und der dazwischen liegenden Reibring 8 miteinander verspannt werden, ergibt sich eine Anpresskraft Q, mit der das erste Kegelreibrad 2 gegen den Reibring 8 bzw. das zweite Kegelreibrad 3 gegen den Reibring 8 drückt. Diese Anpresskraft Q wird hier als Punktkraft dargestellt. Sie entspricht einer Resultierenden, die sich aus einer Pressungsverteilung über eine Breite $B_{RI}$ der inneren Kontaktoberfläche 12 des Reibrings 8 ergibt.

Wie aus der Figur 2 deutlich wird, weist die innere Kontaktoberfläche 12 des Reibringes 8 eine ballige Form auf. Die Kontaktoberfläche 12 erstreckt sich dabei von einer ersten Kante 20 bis zu einer zweiten Kante 21 des Reibringes 8. Zu einer Mitte 22, die jeweils in Erstreckungsrichtung der Kontaktoberfläche 16 einen gleichen Abstand zu den Kanten 20, 21 aufweist, ist die innere Kontaktoberfläche 12 symmetrisch ausgebildet. Der Verlauf der Kontaktoberfläche 12 lässt sich durch eine Funktion P(x) beschreiben. Die Variable x stellt dabei den Abstand von der Mitte 22 der inneren Kontaktoberfläche 12 des Reibringes 8 dar.

Wie oben bereits ausgeführt, ist die Profilfunktion P(x) eine logarithmische Funktion. In der Annahme, dass in der Mitte 22 der inneren Kontaktoberfläche 12 P(x) gleich Null ist und, wie in Figur 2 dargestellt, in diesem Punkt 22 die Kontaktoberfläche 16 berührt, stellt die Funktion P(x) den Abstand der Profiloberfläche von der geradlinigen Kontaktoberfläche 16 dar. Es sei darauf hingewiesen, dass der Verlauf gemäß der erfindungsgemäßen Funktion P(x) für die Kontaktoberflächen 12, 13 des unbelasteten Reibringes 8 gelten sollen. Im Betrieb des Kegelringgetriebes 1, bei dem der Reibring 8 der Anpresskraft Q ausgesetzt ist, kommt es aufgrund der Elastizität des vorzugsweise metallischen Reibringes 8 und der Kegelreibräder 2, 3 zu einer Verformung der Kontaktoberflächen 12, 13 mit der durch die Erfindung erzielten Folge, dass sich über die Breite $B_{RI}$ der Kontaktfläche 12 eine gleichmäßige Pressungsverteilung ohne Kantentragen einstellt.

Für ein Kegelreibringgetriebe in einem PKW und den dort gegebenen Anforderungen an das übertragbare Drehmoment kann die Funktion P(x) in der direkten Nähe der Kanten 20, 21 Werte von beispielsweise 5 bis 150 m annehmen. Dies bedeutet, dass von der Mitte 22 zu den Kanten 20, 21 die innere Kontaktoberfläche um 5 bis 150 m abfällt, wobei der Verlauf der Funktion P(x) folgt. Das obige Zahlenbeispiel hinsichtlich des Verlaufs der inneren Kontaktoberfläche macht deutlich, dass Figur 2 zwecks Anschaubarkeit die Funktion P(x) stark überhöht darstellt.

Die bezüglich der inneren Kontaktoberfläche 12 beschriebenen Zusammenhänge gelten sinngemäß auch für die äußere Kontaktoberfläche 13. Auch diese Kontaktoberfläche ist zu einer Mitte 23 symmetrisch ausgebildet, folgt einer logarithmischen Funktion P(x) gemäß Erfindung und wird durch Kanten 24, 25 begrenzt.

Die Anpresskraft Q wirkt entlang einer Wirklinie 29 durch die Mitte 22 der inneren Kontaktoberfläche 12 und durch die Mitte 23 der äußeren Kontaktoberfläche 13. Somit wird kein unerwünschtes Kippmoment durch die Anpresskraft Q in den Ring eingeleitet.

Aufgrund des hier nicht dargestellten Verstellmechanismus sind die Kanten 20, 21, 24, 25 nicht parallel zur Wirklinie 29 der Anpresskraft Q angeordnet. Das führt zu einer Verschmälerung der Kontaktoberfläche 12 des Reibrings 8. Zur Vermeidung eines unerwünschten Kippmoments (vgl. vorheriger Abschnitt) folgt, dass die Breite des Drehmomentübertragenden Abschnitts der Kontaktoberfläche 12 zwischen Mitte 22 und Kante 20 gleich der Länge des Abschnitts zwischen Mitte 22 und einem Übergang 28 ist. Diese Länge beträgt jeweils ½ $B_{RI}$. Zwischen Übergang 28 und Kante 21 ist eine Rücknahme 27 angebracht, deren Abstand zum Kegelreibrad 2 deutlich größer ist, als ein maximaler Funktionswerts der Funktion P(x). Damit wird eine unerwünschte Kraftübertragung im Bereich der Rücknahme 27 verhindert. Der Übergang 28 kann gerade, stufig und/oder mit einem Steigungssprung erfolgen. Die Ausführung zeigt, dass im Bereich einer inneren Kontaktoberfläche 12 eine Ringbreite $B_{RI}$ geringer sein kann, als eine Ringbreite $B_{RA}$ im Bereiche einer äußeren Kontaktoberfläche 13.

Bezugszeichenliste

| | |
|---|---|
| 1 | Kegelringgetriebe |
| 2 | erstes Kegelreibrad |
| 3 | zweites Kegelreibrad |
| 4 | Drehachse |
| 5 | Drehachse |
| 6 | Kupplung |
| 7 | Welle |
| 8 | Reibring |
| 9 | Zahnrad |
| 10 | Ringzahnrad |
| 11 | Abtriebseinheit |
| 12 | innere Kontaktoberfläche |
| 13 | äußere Kontaktoberfläche |
| 14 | Innendurchmesser |

15 Außendurchmesser
16 Kontaktoberfläche
17 erste Kontaktzone
18 zweite Kontaktzone
19 Kontaktoberfläche
20 Kante
21 Kante
22 Mitte
23 Mitte
24 Kante
25 Kante
26 Drehachse
27 Rücknahme
28 Übergang
29 Wirklinie

**Patentansprüche**

1. Kegelringgetriebe (1) mit zwei entgegengesetzt zueinander angeordneten Kegelreibrädern (2, 3) und mit einem Reibring (8), der eines der Kegelreibräder (2, 3) umgreift und über eine innere Kontaktoberfläche (12) mit dem umgriffenen Kegelreibrad (2) sowie über eine äußere Kontaktoberfläche (13) mit dem anderen Kegelreibrad (3) in Eingriff steht, **dadurch gekennzeichnet, dass** wenigstens eine der Kontaktoberflächen (12, 13) in einem Schnitt senkrecht zu einer Umlaufrichtung des Reibrings (8) ein Profil P gemäß folgendem Zusammenhang aufweist:

$$P(x) = A \cdot \ln\big(F(x)\big)$$

mit

   P(x) Profilfunktion;
   x Abstand zu einer Mitte (22, 23) der Kontaktfläche (12, 13);
   F(x) Funktion als Argument der logarithmischen Funktion In; und
   A Faktor.

2. Kegelringgetriebe (1) nach Anspruch 1, **dadurch gekennzeichnet, dass** die Funktion F(x) lautet:

$$F(x) = \frac{1}{1 - \left(\dfrac{2 \cdot x}{B_R}\right)^2}$$

mit $B_R = B_{RI}$ oder $B_R = B_{RA}$ Breite der Kontaktoberfläche (12, 13).

3. Kegelringgetriebe (1) nach Anspruch 1 oder 2, **da-** **durch gekennzeichnet, dass** der Faktor A proportional zu einer Anpresskraft Q ist, mit der der Reibring (8) gegen die Kegelreibräder (2, 3) gedrückt wird.

4. Kegelringgetriebe (1) nach einem der Ansprüche 1 bis 3, **dadurch gekennzeichnet, dass** der Faktor A umgekehrt proportional zu einem Elastizitätsmodul E eines Materials des Reibrings (8) und/oder der Kegelreibräder (2, 3) ist.

5. Kegelringgetriebe (1) nach einem der Ansprüche 1 bis 4, **dadurch gekennzeichnet, dass** der Faktor A umgekehrt proportional zu der Breite $B_R$ der Kontaktfläche (12, 13.) ist.

6. Kegelringgetriebe(1) nach einem der Ansprüche 1 bis 4, **dadurch gekennzeichnet, dass** der Faktor A proportional zu einem Term T ist, wobei gilt:

$$T = 1 - \mu^2,$$

mit

   $\mu$ Querkontraktionszahl des Materials des Reibrings (8) und/oder der Kegelreibräder (2, 3).

7. Kegelringgetriebe (1) nach einem der Ansprüche 1 bis 6, **dadurch gekennzeichnet, dass** der Faktor A wie folgt aufgebaut ist:

$$A = \frac{a \cdot Q \cdot (1 - \mu^2)}{E \cdot B_R}$$

mit

   a Konstante zwischen 0,4 und 0,8; vorzugsweise gleich $2/\pi$.

8. Kegelringgetriebe (1) nach Anspruch 7, **dadurch gekennzeichnet, dass** eine Konstante $a_i$ für die innere Kontaktoberfläche (12) von einer Konstanten $a_a$ für die äußere Kontaktfläche (13) abweicht.

9. Kegelringgetriebe (1) nach Anspruch 8, **dadurch gekennzeichnet, dass** die Konstante $a_i$ größer ist als die Konstante $a_a$.

10. Reibring (8) für ein Kegelringgetriebe (1) gemäß den Ansprüchen 1 bis 9.

**Claims**

1. Conical ring transmission (1) having two conical friction wheels (2, 3) which are arranged oppositely to one another and having a friction ring (8) which encompasses one of the conical friction wheels (2, 3) and which is in engagement by means of an inner contact surface (12) with the encompassed conical friction wheel (2) and by means of an outer contact surface (13) with the other conical friction wheel (3), **characterized in that** at least one of the contact surfaces (12, 13) has, in a section perpendicular to a rotational direction of the friction ring (8), a profile P corresponding to the following equation:

$$P(x) = A \cdot \ln(F(x))$$

where

P(x) is the profile function;
x is the spacing to a centre (22, 23) of the contact surface (12, 13);
F(x) is a function as an argument of the logarithmic function ln; and
A is a factor.

2. Conical ring transmission (1) according to Claim 1, **characterized in that** the function F(x) is as follows:

$$F(x) = \cfrac{1}{1 - \left(\cfrac{2 \cdot x}{B_R}\right)^2}$$

where

$B_R = B_{RI}$ or $B_P = B_{RA}$ is the width of the contact surface (12, 13).

3. Conical ring transmission (1) according to Claim 1 or 2, **characterized in that** the factor A is proportional to a pressure force Q with which the friction ring (8) is pressed against the conical friction wheels (2, 3).

4. Conical ring transmission (1) according to one of Claims 1 to 3, **characterized in that** the factor A is inversely proportional to a modulus of elasticity E of a material of the friction ring (8) and/or of the conical friction wheels (2, 3).

5. Conical ring transmission (1) according to one of Claims 1 to 4, **characterized in that** the factor A is inversely proportional to the width $B_R$ of the contact surface (12, 13).

6. Conical ring transmission (1) according to one of Claims 1 to 4, **characterized in that** the factor A is proportional to a term T, which is defined by:

$$T = 1 - \mu^2 ,$$

where

$\mu$ is the Poisson's ratio of the material of the friction ring (8) and/or of the conical friction wheels (2, 3).

7. Conical ring transmission (1) according to one of Claims 1 to 6, **characterized in that** the factor A is defined as follows:

$$A = \frac{a \cdot Q \cdot (1 - \mu^2)}{E \cdot B_R}$$

where

a is a constant between 0.4 and 0.8; preferably equal to $2/\pi$.

8. Conical ring transmission (1) according to Claim 7, **characterized in that** a constant $a_i$ for the inner contact surface (12) differs from a constant $a_a$ for the outer contact surface (13).

9. Conical ring transmission (1) according to Claim 8, **characterized in that** the constant $a_i$ is greater than the constant $a_a$.

10. Friction ring (8) for a conical ring transmission (1) according to Claims 1 to 9.

**Revendications**

1. Engrenage à bague conique (1) comprenant deux roues de friction coniques (2, 3) disposées en opposition l'une à l'autre et comprenant une bague de friction (8) qui entoure l'une des roues de friction coniques (2, 3) et qui est en prise par le biais d'une surface de contact interne (12) avec la roue de friction conique (2) qu'elle entoure et par le biais d'une surface de contact externe (13) avec l'autre roue de friction conique (3), **caractérisé en ce qu'**au moins l'une des surfaces de contact (12, 13) présente dans une coupe perpendiculaire au sens de rotation de la bague de friction (8) un profil P selon l'équation suivants :

$$P(x) = A \cdot \ln(F(x))$$

où P(x) est la fonction du profil ;
x est l'écart par rapport à un centre (22, 23) de la surface de contact (12, 13) ;
F(x) est la fonction qui fait office d'argument de la fonction logarithmique ; et
A est un facteur.

**2.** Engrenage à bague conique (1) selon la revendication 1, **caractérisé en ce que** la fonction F(x) se présente comme suait :

$$F(x) = \frac{1}{1 - \left(\dfrac{2 \cdot x}{B_R}\right)^2}$$

avec $B_R = B_{RI}$ ou $B_R = B_{RA}$ désignant la largeur de la surface de contact (12, 13).

**3.** Engrenage à bague conique (1) selon la revendication 1 ou 2, **caractérisé en ce que** le facteur A est proportionnel à une force de compression Q avec laquelle la bague de friction (8) est poussée contre les roues de friction coniques (2, 3).

**4.** Engrenage à bague conique (1) selon l'une des revendications 1 à 3, **caractérisé en ce que** le facteur A est inversement proportionnel à un module d'élasticité E d'un matériau de la bague de friction (8) et/ou des roues de friction coniques (2, 3).

**5.** Engrenage à bague conique (1) selon l'une des revendications 1 à 4, **caractérisé en ce que** le facteur A est inversement proportionnel à la largeur $R_B$ de la surface de contact (12, 13).

**6.** Engrenage à bague conique (1) selon l'une des revendications 1 à 4, **caractérisé en ce que** le facteur A est proportionnel à un terme T qui est défini comme suait :

$$T = 1 - \mu^2$$

où μ est l'indice de contraction transversal du matériau de la bague de friction (8) et/ou des roues de friction coniques (2, 3).

**7.** Engrenage à bague conique (1) selon l'une des revendications 1 à 6, **caractérisé en ce que** le facteur A est constitué comme suait :

$$A = \frac{a \cdot Q \cdot (1 - \mu^2)}{E \cdot B_R}$$

avec a désignant une constante comprise entre 0,4 et 0,8, de préférence égale à 2/π.

**8.** Engrenage à bague conique (1) selon la revendication 7, **caractérisé en ce qu'**une constante $a_i$ pour la surface de contact interne (12) est différente d'une constante $a_a$ pour la surface de contact externe (13) .

**9.** Engrenage à bague conique (1) selon la revendication 8, **caractérisé en ce que** la constante $a_i$ est supérieure à la constante $a_a$.

**10.** Bague de friction (8) pour un engrenage à bague conique (1) selon les revendications 1 à 9.

Fig. 1

Fig. 2

**IN DER BESCHREIBUNG AUFGEFÜHRTE DOKUMENTE**

**In der Beschreibung aufgeführte Patentdokumente**

- DE 19837368 A
- DE 10303891 A1